# EUROPÄISCHE PATENTSCHRIFT

(11) **EP 2 709 872 B1**
(45) Veröffentlichungstag und Bekanntmachung des Hinweises auf die Patenterteilung: **06.07.2022**
(21) Anmeldenummer: 12724893.8
(22) Anmeldetag: 07.05.2012
(51) Int. Cl.: B60L 7/18, B60L 7/26, B60L 15/20, B60L 58/12, B60L 58/16

(54) **VERFAHREN UND VORRICHTUNG ZUR STEUERUNG EINER BREMSLEISTUNG EINES ELEKTRO- ODER HYBRIDFAHRZEUGS**
METHOD AND DEVICE FOR CONTROLLING A BRAKING POWER OF AN ELECTRIC OR HYBRID VEHICLE
PROCÉDÉ ET DISPOSITIF DE COMMANDE D'UNE FORCE DE FREINAGE DE VÉHICULE ÉLECTRIQUE OU HYBRIDE

(30) Priorität: 14.05.2011 DE 102011101543
(43) Veröffentlichungstag der Anmeldung: 26.03.2014
(60) Teilanmeldung: 21214141.0
(73) Patentinhaber: Volkswagen Aktiengesellschaft, 38436 Wolfsburg (DE)
(72) Erfinder: WEISS, Norbert, 38173 Sickte (DE); AUER, Richard, 38442 Wolfsburg (DE)
(86) Internationale Anmeldenummer: PCT/EP2012/001946
(87) Internationale Veröffentlichungsnummer: WO 2012/156037

(56) Entgegenhaltungen:
- DE-A1-102007 035 424
- DE-A1-102008 012 636
- DE-A1-102009 039 615
- US-A- 5 839 800
- US-B1- 6 459 980

## Beschreibung

Die Erfindung betrifft ein Verfahren und eine Vorrichtung zur Steuerung einer Bremsleistung eines Elektro- oder Hybridfahrzeugs.

Aus der DE 10 2008 054 859 A1 ist ein Verfahren zur Steuerung einer Bremsbetätigung einer hydraulischen Fahrzeugbremsanlage eines Kraftfahrzeuges bekannt, das einen Elektro-Antriebsmotor aufweist, der zum Bremsen des Kraftfahrzeuges als Generator betreibbar ist, wobei die Fahrzeugbremsanlage einen muskelkraftbetätigbaren Hauptbremszylinder, an den eine Radbremse angeschlossen ist, und einen Hydrospeicher, der über ein Ventil an die Fahrzeugbremsanlage angeschlossen ist, aufweist, wobei, wenn bei einer Bremsbetätigung der Elektro-Antriebsmotor als Generator betrieben wird, durch Öffnen des Ventils ein Bremsflüssigkeitsvolumen in den Hydrospeicher geleitet und dadurch ein Radbremsdruck in der Radbremse verringert wird. Damit wird erreicht, dass sich ein gleiches Pedalgefühl und Pedalverhalten bei einer Bremsbetätigung mit dem Elektro-Antriebsmotor im Generatorbetrieb einstellt wie ohne die Bremswirkung des Elektro-Antriebsmotors. Ein Fahrzeugführer merkt nichts vom Verblenden, also davon, dass ein Teil der Bremswirkung vom Elektro-Antriebsmotor im Generatorbetrieb bewirkt wird, selbst dann, wenn der Anteil während der Bremsung schwankt.

Das Dokument DE 10 2009 039 615 A1 bezieht sich auf ein Verfahren zur Steuerung eines Verzögerungssystems für ein Kraftfahrzeug mit einem elektrisch-regenerativen System zum Abbremsen des Fahrzeugs durch Aufbringen eines Rekuperationsmoments an einer Antriebsachse des Kraftfahrzeuge, und mit einer Anzahl von Reibbremsen zum Abbremsen des Fahrzeugs durch Aufbringen eines Bremsmoments, wobei im Schubbetrieb des Kraftfahrzeuge anhand vorgegebener Kennknien und/oder Kenngrößen ein Soll-Rekuperationsmoment ermittelt und durch das elektrisch-regenerative System aufgebracht wird. Erfindungsgemäß wird bei Vorliegen vorgegebener Reduzierungsbedingungen im Schubbetrieb ein gegenüber dem ermittelten Soll-Rekuperationsmoment reduziertes Rekuperationsmoment aufgebracht, und gleichzeitig an einem Rad oder mehreren Rädern ein derartiges Bremsmoment durch die entsprechenden Reibbremsen aufgebracht, so dass eine gegenüber dem eingestellten reduzierten Rekuperationsmoment zu erreichende reduzierte Verzögerungswirkung erhöhte Verzögerungswirkung erzielt wird.

Aus dem Dokument US 5,839,800 A ist außerdem ein System zur Bremssteuerung bei elektrischen Automobilen bekannt, welches mechanisches und regeneratives Bremsen kombiniert. Es beinhaltet eine Bremskraft-Einstell-Einheit zur Festlegung einer Ziel-Bremskraft auf Basis einer Bremspedalbetätigung, ein Regenerations-Steuerungssystem zur Festlegung einer regenerativ erzeugten Bremskraft auf Basis einer Bremspedalbetätigung und zur Steuerung der regenerativen Bremsung durch den Motor sowie eine Einheit zur Steuerung der mechanischen Bremskraft, welche die mechanische Bremskraft auf Basis der Differenz zwischen der Ziel-Bremskraft und einer tatsächlichen Bremskraft einstellt.

Aus der DE 10 2010 004 846 A1 ist ein Verfahren zur Rekuperation für ein Elektrofahrzeug bekannt, wobei das Elektrofahrzeug einen Elektromotor zum Antrieb des Elektrofahrzeugs und einen Energiespeicher zur Versorgung des Elektromotors mit elektrischer Energie umfasst, wobei das Elektrofahrzeug ein erstes Bedienelement zum Bremsen des Elektrofahrzeugs, ein zweites Bedienelement zum Beschleunigen des Elektrofahrzeugs und ein drittes Bedienelement zum Vorgeben eines Soll-Rekuperationsmoments umfasst, wobei in einem Rekuperationsbetrieb des Elektrofahrzeugs die Rekuperation automatisch gemäß dem vorgegebenen Soll-Rekuperationsmoment durchgeführt wird, um das Elektrofahrzeug gemäß dem Soll-Rekuperationsmoment abzubremsen und den Soll-Rekuperationsmoment entsprechende elektrische Energie über den als Generator betriebenen Elektromotor dem Energiespeicher zuzuführen. Indem beispielsweise der Fahrer des Elektrofahrzeugs über das dritte Bedienelement das Soll-Rekuperationsmoment vorgeben kann, kann der Fahrer vorteilhafterweise das Rekuperationsverhalten seines Fahrzeugs nach seinen Wünschen einstellen. Dadurch ist es beispielsweise möglich, dass die durch die Rekuperation erzielte Bremswirkung entsprechend der Wünsche des Fahrers eingestellt werden kann. Die Rekuperation wird insbesondere dann durchgeführt, wenn eine von den folgenden Bedingungen oder Zuständen vorliegt:
1) Das erste Bedienelement, z.B. ein Bremspedal, wird betätigt.
2) Ein Verstellweg des zweiten Bedienelements, z.B. ein Fahrpedal, liegt unterhalb einem vorbestimmten Verstellweg, z.B. 10 % des maximalen Verstellweges. Dabei kann der vorbestimmte Verstellweg abhängig von der aktuellen Geschwindigkeit sein. Je größer (kleiner) die aktuelle Geschwindigkeit des Fahrzeugs ist, desto größer (kleiner) wird in der Regel der vorbestimmte Verstellweg eingestellt. Wenn der Verstellweg des zweiten Bedienelements unterhalb des vorbestimmten Verstellwegs liegt, wird die Rekuperation durchgeführt, wenn vorher mittels eines vierten Bedienelements des Fahrzeugs der Rekuperationsbetrieb eingeschaltet worden ist. Wenn die zweite Bedingung vorliegt, kann das von einem Fahrzeug mit Verbrennungsmotor bekannte Schleppmoment vorteilhafterweise dem Wunsch des Fahrers entsprechend eingestellt werden. Dabei wird unter einem Schleppmoment dasjenige Moment verstanden, welches benötigt wird, um den eingekuppelten Verbrennungsmotor, welchem kein Betriebsmittel zugeführt wird, mitzuschleppen. Dabei wird vorgeschlagen, dass das verwendete Rekuperationsmoment dabei wie folgt eingestellt werden kann:
   - Das Rekuperationsmoment wird entsprechend dem vorgegebenen Soll-Rekuperationsmoment eingestellt.
   - Das Rekuperationsmoment wird abhängig von einem Abstand des Elektrofahrzeugs zu einem vor dem Elektrofahrzeug fahrenden Fahrzeug eingestellt.
   - Das Rekuperationsmoment wird abhängig von einer Topographie eines aktuell von dem Elektrofahrzeug befahrenen Fahrwegs oder Straße eingestellt.
   - Das Rekuperationsmoment kann abhängig von einem Batteriezustand eingestellt werden. Dabei wird der Batteriezustand insbesondere durch die Temperatur der Batterie, durch das Alter der Batterie und durch den Ladezustand der Batterie definiert. Bei einem nahezu maximalen Ladezustand wird das Rekuperationsmoment z.B. bei sonst gleichen Bedingungen kleiner als bei einer Batterie mit einem geringeren Ladezustand eingestellt. Genauso wird das Rekuperationsmoment bei einer kälteren Batterie bei sonst gleichen Bedingungen z.B. kleiner als bei einer wärmeren Batterie eingestellt. Das Alter der Batterie wirkt sich in der Regel negativ auf den maximalen Ladezustand aus, so dass eine ältere Batterie einen geringeren maximalen Ladezustand aufweist, was dann abhängig von dem aktuellen Ladezustand der Batterie zu einem geringer eingestellten Rekuperationsmoment als bei einer jüngeren Batterie mit gleichem Ladezustand führen kann.
   - Das Rekuperationsmoment ist abhängig von der aktuellen Geschwindigkeit des Fahrzeugs. Diese Abhängigkeit kann beispielsweise über Kennlinien, in welche auch die aktuelle Stellung des zweiten Bedienelements einfließen kann, berücksichtigt werden.
   - Das Rekuperationsmoment ist abhängig von einer Fahrweise des Fahrers. Diese kann beispielsweise vom Fahrer manuell vorgegeben werden (z.B. sportlich oder nicht sportlich). Je sportlicher oder aggressiver die Fahrweise ist, desto größer kann das Rekuperationsmoment eingestellt werden.
   - Das Rekuperationsmoment ist von der Fahrsituation abhängig. Je größer beispielsweise eine Glatteisgefahr ist, desto geringer wird das Rekuperationsmoment eingestellt.

Der Erfindung liegt das technische Problem zugrunde, ein Verfahren und eine Vorrichtung zur Steuerung einer Bremsleistung eines Elektro- oder Hybridfahrzeugs zu schaffen, welche einer energieoptimierten Fahrweise nicht zuwiderlaufen.

Die Lösung des technischen Problems ergibt sich durch die Gegenstände mit den Merkmalen der Ansprüche 1 und 6. Weitere vorteilhafte Ausgestaltungen der Erfindung ergeben sich aus den Unteransprüchen.

Hierzu ist eine Auswerte- und Steuereinheit vorgesehen, mittels derer eine Rekuperationsleistung bestimmt wird, die aktuell unter Berücksichtigung mindestens eines Parameters erzeugt werden kann, wobei eine Differenz zwischen der aktuell erzeugbaren Rekuperationsleistung und einer eingestellten oder vorgegebenen Rekuperationsleistung bestimmt wird. Leistung und Moment sollen nachfolgend synonym verstanden werden. Die vorgegebene Rekuperationsleistung kann dabei systemseitig festgelegt sein oder durch einen Nutzer einstellbar sein. Die eingestellte Rekuperationsleistung kann dabei beispielsweise ein qualitativer Bereich sein wie beispielsweise minimal, mittel oder maximal. Alternativ können die Bereiche Prozentbereiche eines Maximalwertes sein. Denkbar ist jedoch auch die Vorgabe konkreter Leistungen. Die Auswerte- und Steuereinheit steuert dann eine Elektromaschine zur Erzeugung der aktuell möglichen Rekuperationsleistung und eine elektrisch steuerbare Betriebsbremse zur Erzeugung einer Bremsleistung derart an, dass die ermittelte Differenz der Rekuperationsleistungen durch die Betriebsbremse vollständig oder teilweise kompensiert wird. Dadurch erhält der Fahrer ein reproduzierbares Bremsverhalten, insbesondere Schleppverhalten, seines Fahrzeugs, auch wenn aktuell die Rekuperationsleistung geringer ist. Die vorgegebene Rekuperationsleistung kann dabei auch eine systemseitig festgelegte bzw. vorgegebene und gegebenenfalls zuvor ermittelte Rekuperationsleistung sein. Dies ist insbesondere bei Anfahrten an einer Steigung bzw. einem Rückwärtsrollen an einer Steigung von Vorteil. Möchte der Kraftfahrzeugführer an einer Steigung anfahren und löst die Bremse, so rollt das Fahrzeug rückwärts. Um das Fahrzeug mit Vortrieb anzutreiben, muss daher das Fahrzeug zunächst gehalten bzw. gebremst werden. Durch Rekuperationsleistung kann ein Bremsmoment generiert werden, das ein Rückwärtsrollen verhindert. Diese notwendige Rekuperationsleistung kann systemseitig ermittelt und festgelegt (vorgegeben) werden. Kann nun diese festgelegte Rekuperationsleistung nicht erbracht werden, beispielsweise weil die Traktionsbatterie vollgeladen ist, so kann die Differenz durch die Betriebsbremse kompensiert werden, ohne dass der Fahrer das Bremspedal betätigt bzw. betätigen muss. Entsprechend kann vorgesehen sein, dass eine Rückrollgeschwindigkeit an einer Steigung begrenzt wird, wozu ebenfalls eine Rekuperationsleistung verwendet werden kann. Auch hier kann dann eine möglicherweise fehlende Rekuperationsleistung durch die Betriebsbremse kompensiert werden. In allen Fällen ist für den Fahrer das Fahrzeugverhalten reproduzierbar. Die elektrisch steuerbare Betriebsbremse kann dabei eine elektromechanische oder eine elektro-hydraulische Betriebsbremse sein. Dabei sei angemerkt, dass der Begriff Steuerung auch eine Regelung umfassen soll. Die Ansteuerung der Betriebsbremse zur Kompensation der Differenz erfolgt zeitlich beschränkt und/oder zeitlich abnehmend.

In einer Ausführungsform ist der mindestens eine Parameter ein Ladezustand einer Traktionsbatterie (SOC, state of Charge) und/oder ein Alterungszustand einer Traktionsbatterie (SOH, state of health) und/oder eine ermittelte Fahrsituation und/oder eine Temperatur einer Traktionsbatterie. Die Fahrsituation kann dabei beispielsweise eine Klassifikation einer Fahrstrecke (Autobahn, Stadtfahrt, Landstraße) und/oder die Fahrzeuggeschwindigkeit und/oder eine Topographie einer Fahrstrecke und/oder eine aktive Geschwindigkeitsregelanlage sein.

In einer weiteren Ausführungsform erfolgt die Ansteuerung der Betriebsbremse zur Kompensation der Differenz unter Berücksichtigung eines Wichtungsfaktors k < 1. Dadurch wird verhindert, dass über längere Zeiträume mittels der Betriebsbremse gebremst wird, was einer energieoptimierten Fahrweise zuwiderlaufen würde. Die Dauer und/oder zeitliche Abnahme der Bremsleistung der Betriebsbremse und/oder die Höhe des Wichtungsfaktors kann dabei parametrierbar sein und insbesondere abhängig von der Fahrsituation gewählt werden.

In einer weiteren Ausführungsform ist die Kompensation der Differenz durch ein weiteres Mittel abschaltbar. Vorzugsweise kann der Nutzer manuell auswählen, ob dieser überhaupt ein Rekuperationsmoment als Schleppmoment wünscht und ob dieses dann situativ kompensiert werden soll, falls die aktuell erzeugbare Rekuperationsleistung zu gering ist. Es ist aber auch möglich, die Abschaltung beispielsweise in Abhängigkeit einer Fahrsituation automatisch vorzusehen.

In einer weiteren Ausführungsform ist mindestens ein Signalisierungsmittel vorgesehen, um visuell und/oder akustisch und/oder haptisch die erfolgende und/oder erfolgte Kompensation zu signalisieren.

Die Erfindung wird nachfolgend anhand eines bevorzugten Ausführungsbeispiels näher erläutert. Die Fig. zeigen:
- Fig. 1: ein schematisches Blockschaltbild einer Vorrichtung zur Steuerung einer Bremsleistung eines Elektro- oder Hybridfahrzeugs und
- Fig. 2: einen beispielhaften zeitlichen Verlauf der Bremsmomente.

Die Vorrichtung 1 zur Steuerung einer Bremsleistung eines Elektro- oder Hybridfahrzeugs umfasst eine Auswerte- und Steuereinheit 2, erste Mittel 3 zur Einstellung einer Rekuperationsleistung, zweite Mittel 4 zur Abschaltung eines Schleppmoment-Betriebs, dritte Mittel 5 zur Abschaltung einer Kompensation, eine Elektromaschine 6, mindestens eine elektrisch betätigbare Betriebsbremse 7 und eine Anzeigeeinheit 8. Der Auswerte- und Steuereinheit 2 werden ein Ladezustand SOC, ein Alterungszustand SOH und eine Temperatur T einer nicht dargestellten Traktionsbatterie zugeführt. Die Traktionsbatterie ist dabei mit der Elektromaschine 6 verbunden, wobei die Elektromaschine 6 für einen motorischen Betrieb elektrische Energie der Traktionsbatterie entnimmt und in einem Rekuperationsbetrieb elektrische Energie in die Traktionsbatterie einspeist. Des Weiteren werden der Auswerte- und Steuereinheit 2 ein Geschwindigkeitssignal V des Fahrzeugs und ein Pedalbetätigungssignal P zugeführt.

Über das erste Mittel stellt dann der Nutzer bzw. Fahrer eine gewünschte Rekuperationsleistung ein, mittels derer ein Schleppmoment analog einer Brennkraftmaschine realisiert werden soll. Mittels des zweiten Mittels 4 kann der Nutzer entscheiden, ob ein solcher Schleppmoment wirksam sein soll oder nicht. Es sei nun angenommen, dass der Nutzer sich für ein Schleppmoment entschieden hat. Erfasst dann die Auswerte- und Steuereinheit 2, dass ein Pedalbetätigungssignal P eine Nichtbetätigung des Fahrpedals (bzw. geringer als ein vorgegebener Wert) ist, so prüft die Auswerte- und Steuereinheit 2, welche Rekuperationsleistung bzw. welcher Rekuperationsmoment aktuell unter Berücksichtigung der Parameter SOC, SOH und T der Traktionsbatterie realisierbar ist. Diese mögliche Rekuperationsleistung wird mit der eingestellten Rekuperationsleistung des Nutzers verglichen und die Differenz ermittelt. Diese Differenz kann auch als Differenzbremsmoment ΔM bezeichnet werden. Die Auswerte- und Steuereinheit 2 erzeugt dann ein elektrisches Steuersignal für die elektrisch betätigbare Betriebsbremse 7, damit diese das Differenzbremsmoment ΔM erzeugt. Vom Fahrgefühl verhält sich das Fahrzeug genauso, als wenn das volle Schleppmoment durch Rekuperation aufgebracht wird, d.h. es wird ein reproduzierbares Fahrzeugverhalten erreicht, auch wenn temporär nicht vollständig rekuperiert werden kann.

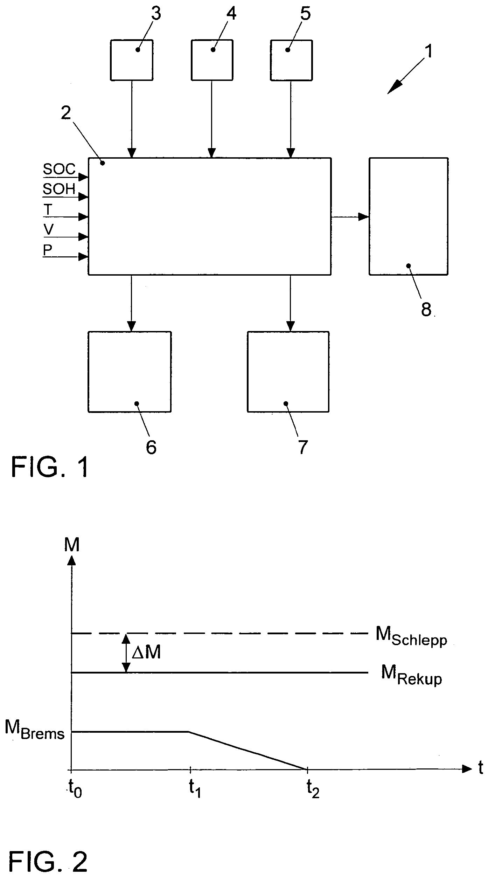

In Fig. 2 ist das gewünschte Schleppmoment M_{Schlepp} dargestellt, das der eingestellten Rekuperationsleistung entspricht. Mit M_{Rekup} ist das aktuell erzeugbare Rekuperationsmoment und mit M_{Brems} das durch die Betriebsbremse 7 erzeugte Bremsmoment bezeichnet. Zum Zeitpunkt t₀ beginnt die Schleppmomentphase, wobei das Differenzbremsmoment ΔM vollständig durch die Betriebsbremse kompensiert wird. Zum Zeitpunkt t₁ wird dann das Bremsmoment M_{Brems} linear bis zum Zeitpunkt t₂ auf Null erniedrigt. Dabei kann der Abfall anstatt linear beispielsweise auch exponentiell sein. Weiter kann auch vorgesehen sein, dass fahrsituationsabhängig nicht das gesamte Differenzmoment ΔM, sondern nur ein Teil, beispielsweise 0,9 - 0,7 · ΔM, kompensiert wird.

## Patentansprüche

1. Verfahren zur Steuerung einer Bremsleistungeines Elektro- oder Hybridfahrzeugs mit einer im Rekuperationsbetrieb betreibbaren Elektromaschine, wobei
- eine Rekuperationsleistung als Schleppmoment
- oder eine Rekuperationsleistung, durch die ein Bremsmoment generiert wird, das ein Rückwärtsrollen verhindert
- oder eine Rekuperationsleistung, durch die eine Rückrollgeschwindigkeit an einer Steigung begrenzt wird,
durch mindestens ein erstes Mittel (3) einstellbar oder vorgegeben ist,
wobei mittels einer Auswerte- und Steuereinheit (2) eine Rekuperationsleistung bestimmt wird, die aktuell unter Berücksichtigung mindestens eines Parameters erzeugt werden kann, wobei eine Differenz zwischen der aktuell erzeugbaren Rekuperationsleistung und der eingestellten oder vorgegebenen Rekuperationsleistung bestimmt wird, wobei die Auswerte- und Steuereinheit (2) die Elektromaschine (6) zur Erzeugung der aktuell möglichen Rekuperationsleistung und eine elektrisch steuerbare Betriebsbremse (7) zur Erzeugung einer Bremsleistung derart ansteuert, dass die ermittelte Differenz der Rekuperationsleistungen durch die Betriebsbremse (7) von einem ersten Zeitpunkt (t₀) bis zu einem zweiten Zeitpunkt (t₁) vollständig oder teilweise kompensiert wird und das von der Betriebsbremse (7) zur Kompensation der Differenz erzeugte Bremsmoment von dem zweiten Zeitpunkt (t₁) bis zu einem dritten Zeitpunkt (t₂) linear oder exponentiell auf null erniedrigt wird.

2. Verfahren nach Anspruch 1, **dadurch gekennzeichnet, dass** der mindestens eine Parameter ein Ladezustand (SOC) einer Traktionsbatterie und/oder ein Alterungszustand (SOH) einer Traktionsbatterie und/oder eine ermittelte Fahrsituation und/oder eine Temperatur (T) einer Traktionsbatterie ist.

3. Verfahren nach Anspruch 1 oder 2, **dadurch gekennzeichnet, dass** die Ansteuerung der Betriebsbremse (7) zur Kompensation der Differenz unter Berücksichtigung eines Wichtungsfaktors k < 1 erfolgt.

4. Verfahren nach einem der vorangegangenen Ansprüche, **dadurch gekennzeichnet, dass** die Kompensation der Differenz abschaltbar ist.

5. Verfahren nach einem der vorangegangenen Ansprüche, **dadurch gekennzeichnet, dass** eine erfolgende Kompensation visuell und/oder akustisch und/oder haptisch signalisiert wird.

6. Vorrichtung (1) zur Steuerung einer Bremsleistung, eines Elektro- oder Hybridfahrzeugs mit einer im Rekuperationsbetrieb betreibbaren Elektromaschine (6), umfassend eine Auswerte- und Steuereinheit (2), mittels derer eine Rekuperationsleistung bestimmbar ist, die aktuell unter Berücksichtigung mindestens eines Parameters erzeugbar ist, wobei eine Differenz zwischen der aktuell erzeugbaren Rekuperationsleistung und
- einer durch mindestens ein erstes Mittel (3) als Schleppmoment eingestellten oder vorgegebenen Rekuperationsleistung
- oder einer durch das mindestens erste Mittel (3) vorgegebenen Rekuperationsleistung, durch die ein Bremsmoment generiert wird, das ein Rückwärtsrollen verhindert,
- oder einer durch das mindestens erste Mittel (3) vorgegebenen Rekuperationsleistung, durch die eine Rückrollgeschwindigkeit an einer Steigung begrenzt wird,
bestimmbar ist, wobei mittels der Auswerte- und Steuereinheit (2) die Elektromaschine (6) zur Erzeugung der aktuell möglichen Rekuperationsleistung und eine elektrisch steuerbare Betriebsbremse (7) zur Erzeugung einer Bremsleistung in Abhängigkeit der ermittelten Differenz ansteuerbar sind und die Ansteuerung der Betriebsbremse (7) zur Kompensation der Differenz zeitlich beschränkt und/oder zeitlich abnehmend derart erfolgt, dass die ermittelte Differenz der Rekuperationsleistungen durch die Betriebsbremse (7) von einem ersten Zeitpunkt (t₀) bis zu einem zweiten Zeitpunkt (t₁) vollständig oder teilweise kompensiert wird und das von der Betriebsbremse (7) zur Kompensation der Differenz erzeugte Bremsmoment von dem zweiten Zeitpunkt (t₁) bis zu einem dritten Zeitpunkt (t₂) linear oder exponentiell auf null erniedrigt wird.

7. Vorrichtung nach Anspruch 6, **dadurch gekennzeichnet, dass** der mindestens eine Parameter ein Ladezustand (SOC) einer Traktionsbatterie und/oder ein Alterungszustand (SOH) einer Traktionsbatterie und/oder eine ermittelte Fahrsituation und/oder eine Temperatur (T) einer Traktionsbatterie ist.

8. Vorrichtung nach einem der Ansprüche 6 und 7, **dadurch gekennzeichnet, dass** die Ansteuerung der Betriebsbremse (7) zur Kompensation der Differenz unter Berücksichtigung eines Wichtungsfaktors k < 1 erfolgt.

9. Vorrichtung nach einem der Ansprüche 6 bis 8, **dadurch gekennzeichnet, dass** die Kompensation der Differenz durch ein weiteres Mittel (5) abschaltbar ist.

10. Vorrichtung nach einem der Ansprüche 6 bis 9, **dadurch gekennzeichnet, dass** die Vorrichtung (1) mindestens ein Signalisierungsmittel umfasst, mittels dessen eine Kompensationsmaßnahme signalisierbar ist.

## Claims

1. Method for controlling a braking power of an electric or hybrid vehicle with an electric machine operable in the recuperation mode, wherein
- a recuperation power, as drag torque,
- or a recuperation power by which a braking torque that prevents reverse rolling is generated,
- or a recuperation power by which a reverse rolling speed is limited on a slope
can be set or is predefined by at least one first means (3),
wherein, by means of an evaluation and control unit (2), a recuperation power is determined which can currently be generated taking into account at least one parameter, wherein a difference between the currently generatable recuperation power and the set or predefined recuperation power is determined, wherein the evaluation and control unit (2) controls the electric machine (6) for generating the currently possible recuperation power and an electrically-controllable service brake (7) for generating a braking power in such a way that the determined difference in the recuperation powers is completely or partially compensated for by the service brake (7) from a first time point (t₀) up to a second time point (ti), and the braking torque generated by the service brake (7) to compensate for the difference is reduced linearly or exponentially to zero from the second time point (t₁) up to a third time point (t₂).

2. Method according to claim 1, **characterized in that** the at least one parameter is a state of charge (SOC) of a traction battery and/or an aging status (SOH) of a traction battery and/or a determined driving situation and/or a temperature (T) of a traction battery.

3. Method according to claim 1 or 2, **characterized in that** the control of the service brake (7) to compensate for the difference takes place taking into account a weighting factor k < 1.

4. Method according to one of the preceding claims, **characterized in that** the compensation for the difference can be switched off.

5. Method according to one of the preceding claims, **characterized in that** a compensation taking place is signaled visually and/or acoustically and/or haptically.

6. Device (1) for controlling a braking power, of an electric or hybrid vehicle with an electric machine (6) that can be operated in recuperation mode, comprising an evaluation and control unit (2), by means of which a recuperation power can be determined which can currently be generated taking into account at least one parameter, wherein a difference between the currently generatable recuperation power and
- a recuperation power set or predefined by at least one first means (3) as drag torque
- or a recuperation power, predefined by the at least first means (3), by which a braking torque that prevents a reverse rolling is generated,
- or a recuperation power, predefined by the at least first means (3), by which a reverse rolling speed is limited on a slope,
can be determined, wherein, by means of the evaluation and control unit (2), the electric machine (6) for generating the currently possible recuperation power and an electrically-controllable service brake (7) for generating a braking power can be controlled as a function of the determined difference, and the control of the service brake (7) to compensate for the difference takes place so as to be limited in time and/or decrease in time in such a way that the determined difference in the recuperation powers is completely or partially compensated for by the service brake (7) from a first time point (t₀) up to a second time point (ti), and the braking torque generated by the service brake (7) to compensate for the difference is reduced linearly or exponentially to zero from the second time point (t₁) up to a third time point (t₂).

7. Device according to claim 6, **characterized in that** the at least one parameter is a state of charge (SOC) of a traction battery and/or an aging status (SOH) of a traction battery and/or a detected driving situation and/or a temperature (T) of a traction battery.

8. Device according to one of claims 6 and 7, **characterized in that** the control of the service brake (7) to compensate for the difference takes place taking into account a weighting factor k < 1.

9. Device according to one of claims 6 through 8, **characterized in that** the compensation for the difference can be switched off by a further means (5).

10. Device according to one of claims 6 through 9, **characterized in that** the device (1) comprises at least one signaling means, by means of which a compensation measure can be signaled.

## Revendications

1. Procédé de commande d'une force de freinage d'un véhicule électrique ou hybride doté d'une machine électrique pouvant fonctionner en mode de récupération, dans lequel
- une puissance de récupération comme couple d'inertie
- ou une puissance de récupération par laquelle un couple de freinage qui empêche un recul est généré
- ou une puissance de récupération par laquelle une vitesse de recul en pente est limitée,
peut être réglée ou est prédéfinie par au moins un premier moyen (3),
dans lequel, au moyen d'une unité d'évaluation et de commande (2), une puissance de récupération, qui peut être générée instantanément en tenant compte d'au moins un paramètre, est déterminée, une différence entre la puissance de récupération pouvant être générée instantanément et la puissance de récupération réglée ou prédéfinie étant déterminée, l'unité d'évaluation et de commande (2) commandant la machine électrique (6) pour générer la puissance de récupération instantanément possible et un frein de service (7) à commande électrique pour générer une force de freinage, de telle manière que la différence déterminée entre les puissances de récupération soit entièrement ou partiellement compensée par le frein de service (7) d'un premier moment (t₀) à un deuxième moment (t₁) et le couple de freinage généré par le frein de service (7) pour la compensation de la différence soit diminué jusqu'à zéro, de manière linéaire ou exponentielle, du deuxième moment (t₁) à un troisième moment (t₂).

2. Procédé selon la revendication 1, **caractérisé en ce que** l'au moins un paramètre est un état de charge (SOC) d'une batterie de traction et/ou un état de vieillissement (SOH) d'une batterie de traction et/ou une situation de conduite déterminée et/ou une température (T) d'une batterie de traction.

3. Procédé selon la revendication 1 ou 2, **caractérisé en ce que** la commande du frein de service (7) pour la compensation de la différence est effectuée en tenant compte d'un facteur de pondération k < 1.

4. Procédé selon l'une quelconque des revendications précédentes, **caractérisé en ce que** la compensation de la différence peut être désactivée.

5. Procédé selon l'une quelconque des revendications précédentes, **caractérisé en ce qu'une** compensation s'effectuant est signalisée de manière visuelle et/ou sonore et/ou haptique.

6. Dispositif (1) de commande d'une force de freinage d'un véhicule électrique ou hybride doté d'une machine électrique (6) pouvant fonctionner en mode de récupération, comprenant une unité d'évaluation et de commande (2), au moyen de laquelle une puissance de récupération, qui peut être générée instantanément en tenant compte d'au moins un paramètre, peut être déterminée, dans lequel une différence entre la puissance de récupération pouvant instantanément être générée et
- une puissance de récupération réglée ou prédéfinie comme couple d'inertie par au moins un premier moyen (3)
- ou une puissance de récupération prédéfinie par l'au moins un premier moyen (3), par laquelle un couple de freinage qui empêche un recul est généré,
- ou une puissance de récupération prédéfinie par l'au moins un premier moyen (3), par laquelle une vitesse de recul en pente est limitée,
peut être déterminée, dans lequel, au moyen de l'unité d'évaluation et de commande (2), la machine électrique (6) peut être commandée pour générer la puissance de récupération instantanément possible et un frein de service (7) à commande électrique peut être commandé pour générer une force de freinage en fonction de la différence déterminée et la commande du frein de service (7) pour la compensation de la différence est effectuée de manière limitée dans le temps et/ou décroissante dans le temps, de telle manière que la différence déterminée entre les puissances de récupération soit entièrement ou partiellement compensée par le frein de service (7) d'un premier moment (t₀) à un deuxième moment (t₁) et le couple de freinage généré par le frein de service (7) pour la compensation de la différence soit diminué jusqu'à zéro, de manière linéaire ou exponentielle, du deuxième moment (t₁) à un troisième moment (t₂).

7. Dispositif selon la revendication 6, **caractérisé en ce que** l'au moins un paramètre est un état de charge (SOC) d'une batterie de traction et/ou un état de vieillissement (SOH) d'une batterie de traction et/ou une situation de conduite déterminée et/ou une température (T) d'une batterie de traction.

8. Dispositif selon l'une quelconque des revendications 6 et 7, **caractérisé en ce que** la commande du frein de service (7) pour la compensation de la différence est effectuée en tenant compte d'un facteur de pondération k < 1.

9. Dispositif selon l'une quelconque des revendications 6 à 8, **caractérisé en ce que** la compensation de la différence peut être désactivée par un autre moyen (5).

10. Dispositif selon l'une quelconque des revendications 6 à 9, **caractérisé en ce que** le dispositif (1) comprend au moins un moyen de signalisation, au moyen duquel une mesure de compensation peut être signalisée.
